# EUROPEAN PATENT APPLICATION

(11) **EP 4 845 045 A1**
(43) Date of publication of application: **25.11.2026**
(21) Application number: 24925914.4
(22) Date of filing: 22.02.2024
(51) Int. Cl.: H04B 7/06, H01Q 15/14, H04B 7/08, H04B 7/14

(54) **COMMUNICATION SYSTEM AND COMMUNICATION METHOD**

(71) Applicant: Softbank Corp., Tokyo 105-7529 (JP)
(72) Inventor: TOMIMOTO, Kazuma, Tokyo 105-7529 (JP)
(74) Representative: SSM Sandmair
(86) International application number: PCT/JP2024/006669
(87) International publication number: WO 2025/177583

(57) **Abstract**

Further utilization of a frequency band is to be promoted. A communication system (1) includes a base station (20) and an information processing apparatus (100). The base station (20) includes a liquid crystal RIS antenna (30) capable of projecting various information that varies depending on an angle. The information processing apparatus (100) includes a control unit (130), which determines provision information to be provided to a user who uses a terminal apparatus (10) that communicates with the base station (20), based on an operation history of the terminal apparatus (10), and projects the determined provision information onto the liquid crystal RIS antenna (30) of the base station at an angle corresponding to the direction of the user.

## Description

### Field

The present invention relates to a communication system and a communication method.

### Background

There is a conventional communication technique using a millimeter wave band to a terahertz wave band in a communication system including a base station, a terminal apparatus, etc.

### Citation List

### Patent Literature

Patent Literature 1: JP 2023-141844 A

### Summary

### Technical Problem

However, the conventional technique has not been able to promote further utilization of a frequency band.

The present application has been made in view of the above, and aims to promote further utilization of a frequency band.

A communication system according to the present application includes: a base station including a liquid crystal RIS antenna capable of projecting various information that varies depending on an angle; and an information processing apparatus including a control unit that determines provision information to be provided to a user who uses a terminal apparatus that communicates with the base station, based on an operation history of the terminal apparatus, and projects the determined provision information onto the liquid crystal RIS antenna of the base station at an angle corresponding to the direction of the user.

### Advantageous Effects of Invention

According to one aspect of the embodiment, there is an effect of being able to promote further utilization of a frequency band.

### Brief Description of Drawings

FIG. 1 is an explanatory diagram illustrating a difference between a massive MIMO antenna and a liquid crystal RIS antenna.
FIG. 2 is a diagram illustrating a configuration example of a communication system according to an embodiment.
FIG. 3 is a diagram illustrating a cross-sectional view of a liquid crystal RIS antenna according to the embodiment.
FIG. 4 is a diagram illustrating an example of information processing according to the embodiment.
FIG. 5 is a diagram illustrating a configuration example of an information processing apparatus according to the embodiment.
FIG. 6 is a diagram illustrating an example of an operation history storage unit according to the embodiment.
FIG. 7 is a diagram illustrating an example of a provision information storage unit according to the embodiment.
FIG. 8 is a diagram illustrating an example of a projection display information storage unit according to the embodiment.
FIG. 9 is a flowchart illustrating an example of information processing according to the embodiment.
FIG. 10 is a hardware configuration diagram illustrating an example of a computer that implements functions of the information processing apparatus.

### Description of Embodiments

Hereinafter, modes for implementing the communication system and the communication method according to the present application (hereinafter referred to as "embodiment") will be described in detail with reference to the drawings. Note that the communication system and the communication method according to the present application are not limited by this embodiment. In the following embodiment, the same portions are denoted by the same reference numerals, and redundant description will be omitted.

### Embodiment

### 1. Introduction

The communication using the millimeter wave band to the terahertz wave band includes a large propagation loss and has difficulty in forming an area, and thus includes a beam scanning function and a gain enhancement function. In addition, the communication in such a frequency band needs a large-scale array antenna and needs to perform cell densification. This increases the number of base stations and increases apparatus cost, and from this viewpoint, utilization of this type of communication is not progressing. This leads to a view that there is a need to improve profitability by attaching additional functions to applications other than communication.

For example, the increase in the amount of data used by an application also increases the demand for active use of the millimeter wave band having availability of a wide frequency band in 5G and subsequent generations, and a service using this band has been actually started. On the other hand, the higher the frequency band, the more the propagation loss, causing the decrease in the area coverage. This has promoted use of a Massive MIMO antenna having a gain enhancement function and a beam tracking function. However, the massive MIMO antenna uses many components such as Radio Frequency (RF) components and an analog-to-digital (A/D) converter, and thus needs more power to drive these components. Therefore, more cost for production and operation will be needed. Therefore, there occurs a demand for an antenna that has a gain enhancement function and a beam tracking function and that can be produced and operated at a lower cost than the Massive MIMO antenna.

In recent years, the technology for Intelligent Radio Surface (IRE), which attempts to adaptively and dynamically control the radio wave (beam) environment, is becoming important. One of the technologies essential for implementation of IRE is a Reconfigurable Intelligent Surface (RIS). The RIS is constituted of a large number of elements that scatter the beam. In addition, the RIS uses a metasurface technology capable of designing and controlling distribution of planar scattering characteristics. Since the metasurface can be produced in a flexible sheet shape and can be installed to extend along the structure, the beam scattering characteristics can be controlled while maintaining the shape of the existing structure.

In addition, by utilizing the technology referred to as "AI-RAN" that combines Artificial Intelligence (AI) and a next-generation mobile network, the base stations can emphasize themselves and optimize the entire area, making it possible to effectively provide information to the user. By utilizing the RAN Intelligent Controller (RIC) technology like this, operation can be optimized.

The present application has been made in view of the above, and aims to promote further utilization of a frequency band. In the following embodiment, in order to greatly reduce components such as the RF component and the A/D converter, a primary radiator including an orthogonally polarized antenna and a liquid crystal RIS antenna having gain enhancement function and a beam scanning function are used. In addition, in order to have benefit from the advantage of using the liquid crystal, there will be an additional function capable of projecting various information that varies depending on an angle (for example, an advertisement of a still image or a moving image, etc.). Specifically, provision information suitable for the taste and interest of the user, who is positioned in the beam scanning angle direction, is projected using the AI on the base station side. This enables production and operation at a lower cost than the Massive MIMO antenna, and enables profit to be achieved by using information provision

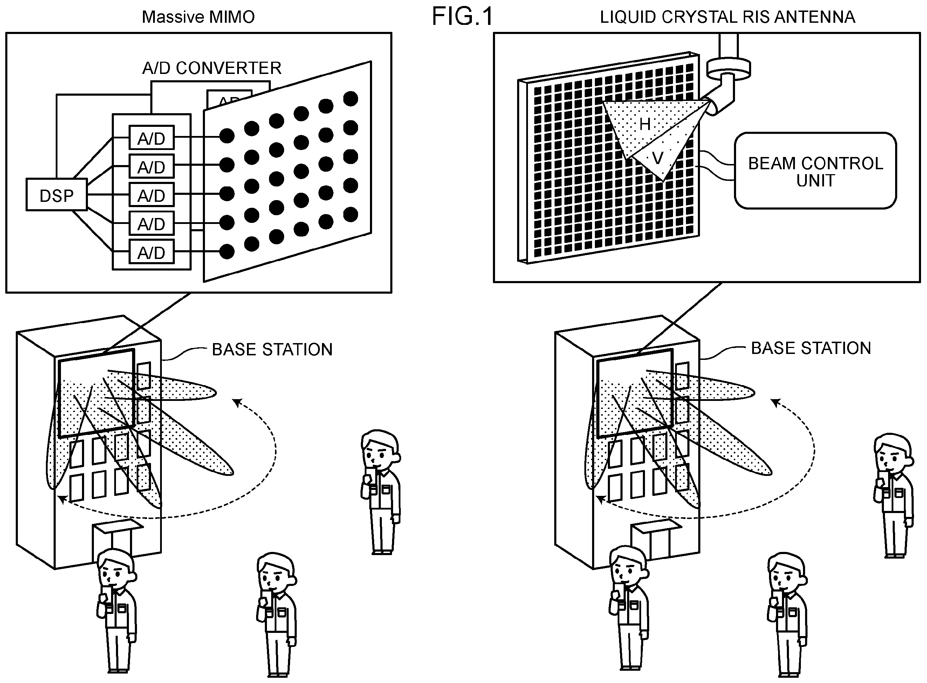

FIG. 1 is an explanatory diagram illustrating a difference between a massive MIMO antenna and a liquid crystal RIS antenna. The massive MIMO antenna (left side in FIG. 1) uses many components such as an A/D converter, a phase shifter, and a feeder line. This increases power consumption. In addition, calibration for each terminal for beam scanning is needed. In the liquid crystal RIS antenna (right side in FIG. 1), a beam is emitted from a primary radiator to hit the liquid crystal RIS antenna and is re-emitted. In addition, the liquid crystal RIS antenna can reduce the number of components such as the A/D converter, leading to reduction of power consumption. In addition, the liquid crystal RIS antenna needs no calibration of each terminal. Note that a beam control unit controls the direction of the beam emitted from the base station. The angle of the beam control unit is fixed in advance, and all beams that hit a predetermined portion of the beam control unit are re-emitted in the same direction. Note that H and V on the right side of FIG. 1 respectively indicate polarization (horizontal H and orthogonal V) of the beam.

### 2. Configuration of communication system

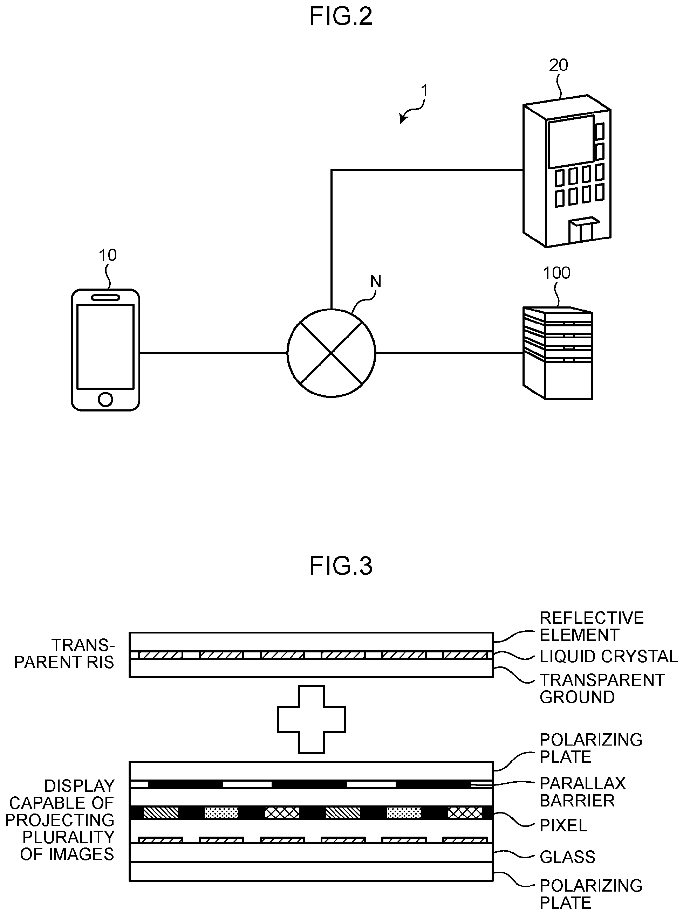

A communication system 1 illustrated in FIG. 2 will be described. As illustrated in FIG. 2, the communication system 1 includes a terminal apparatus 10, a base station 20, and an information processing apparatus 100. The terminal apparatus 10, the base station 20, and the information processing apparatus 100 are communicably connected in a wired or wireless connection via a predetermined communication network (network N). FIG. 2 is a diagram illustrating a configuration example of the communication system 1 according to the embodiment.

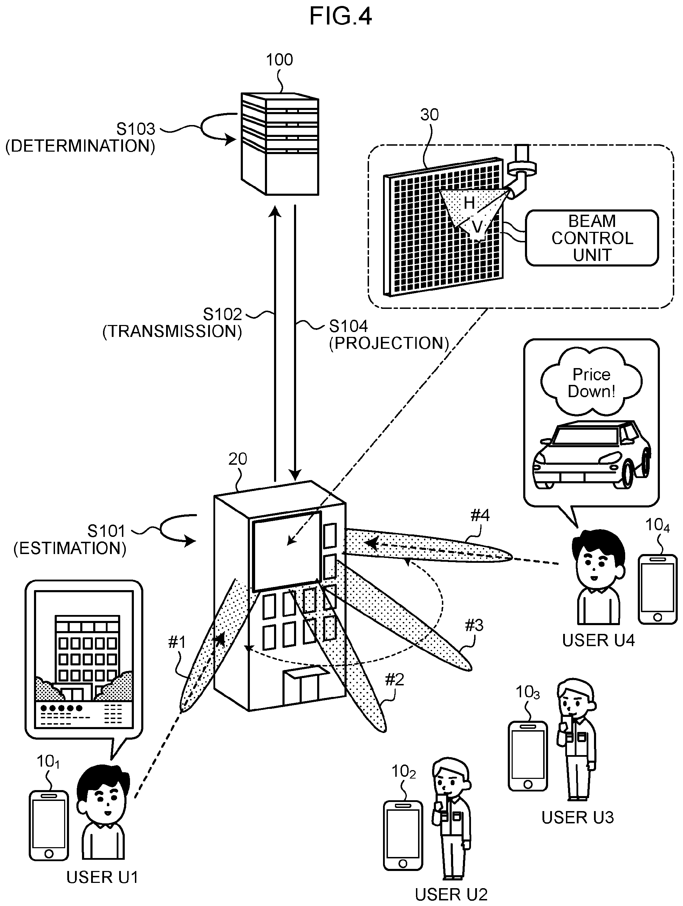

The terminal apparatus 10 is an information processing apparatus used by a user. The user is an owner of the terminal apparatus 10, for example. The terminal apparatus 10 may be any apparatus as long as the apparatus is capable of implementing the processing in the embodiment. The terminal apparatus 10 may be an apparatus such as a smartphone, a tablet terminal, a laptop PC, a desktop PC, a mobile phone, or a PDA, for example. FIG. 4 illustrates a case where the terminal apparatus 10 is a smartphone.

The terminal apparatus 10 is a smart device such as a smartphone or a smart glass, for example, and is a mobile terminal apparatus capable of communicating with a certain server apparatus via a wireless communication network such as 4 generation (4)G to 5G network or Long Term Evolution(LTE) network. Furthermore, the terminal apparatus 10 may include a screen such as a liquid crystal display and having a touch panel function, and may receive various types of operations on content display data, such as a tap operation, a slide operation, and a scroll operation made with a finger, a stylus, etc. by the user. In FIG. 4, the terminal apparatus 10 is used by users U1 to U4.

The base station 20 is a base station that emits a beam. The base station 20 includes a liquid crystal RIS antenna 30 (refer to FIG. 3) formed with a primary radiator and a liquid crystal display. The liquid crystal RIS antenna 30 is a liquid crystal RIS antenna to which an additional function is attached in addition to the communication application, and can project various information that varies depending on an angle (that is, the antenna has a liquid crystal that is capable of performing projection from multiple viewpoints). The liquid crystal RIS antenna 30 can project various information that varies in accordance with the beam scanning angle direction of the user. Accordingly, by performing AI analysis on the operation history (for example, a search history, a browsing history, etc.) of the terminal apparatus 10 existing in the beam forming direction, provision information that seems to be interesting for the user can be projected for each beam direction. This promotes measures for signal dead zones and improvement in MIMO efficiency in communication, enabling achievement of advertising revenue.

FIG. 3 is a diagram illustrating a cross-sectional view of the liquid crystal RIS antenna according to the embodiment. The liquid crystal RIS antenna 30 is a liquid crystal RIS antenna in which a transparent RIS including a reflective element, a liquid crystal, and a transparent ground is installed on a display which is formed with a polarizing plate, a parallax barrier, a pixel, glass, and onto which a plurality of images can be projected. By installing the transparent RIS in an existing display, as in the liquid crystal RIS antenna 30, controlling the scattering characteristic of the beams can be performed while maintaining the shape of the display.

Most antennas used in the current millimeter wave band to terahertz wave band are large-scale array antennas having a large number of RF ports and analog circuits. Such a large-scale array antenna needs high power consumption and high apparatus cost, and is likely to form a signal dead zone. By using the RIS as in the liquid crystal RIS antenna 30, the number of components such as the number of RF ports is reduced, leading to reduction of the apparatus cost. In addition, advertising revenue can be generated by using the antenna as a digital signage.

The base station 20 estimates the position (and direction) of the terminal apparatus 10 by the reception direction in which the beam is received by the terminal apparatus 10. Since the identification information is attached to the direction of the beam emitted from the base station 20, and when the terminal apparatus 10 selects the beam, the base station 20 can specify the reception direction of the beam to be received by the terminal apparatus 10, enabling estimation of the position (and direction) of the terminal apparatus 10. In this manner, the base station 20 estimates the position (and direction) of the terminal apparatus 10 by interaction processing of beams and the terminal apparatus 10.

The information processing apparatus 100 is an information processing apparatus intended to promote further utilization of a frequency band, and may be any apparatus as long as the apparatus can implement processing in the embodiment. The information processing apparatus 100 is implemented by, for example, a server apparatus or a cloud system on the base station 20 side. For example, the information processing apparatus 100 determines provision information directed to the user based on the operation history of the user in the beam scanning angle direction, and projects the provision information onto the liquid crystal RIS antenna 30 at an angle corresponding to the direction of the user.

While FIG. 1 illustrates a case where the base station 20 and the information processing apparatus 100 are separate apparatuses, the base station 20 and the information processing apparatus 100 may be integrated with each other.

### 3. Example of information processing

FIG. 4 is a diagram illustrating an example of information processing of the communication system 1 according to the embodiment. The base station 20 specifies the reception direction of the beam of the terminal apparatus 10 by interaction processing of the beam and the terminal apparatus 10 of the user U1, and thereby estimates the position (and direction) of the user U1 (step S101).

When the base station 20 has specified the user U1 as the user in the beam scanning angle direction, the base station 20 transmits information indicating that the user U1 has been specified (for example, identification information of the user, etc.) to the information processing apparatus 100 (step S102).

Based on the information transmitted from the base station 20, the information processing apparatus 100 acquires the operation history of the user U1 and determines provision information suitable for the taste and interest of the user U1, to be provided to the user (step S103). At this time, for example, the information processing apparatus 100 determines the provision information using a conventional technique (such as "AI-RAN").

The information processing apparatus 100 projects the image onto the liquid crystal RIS antenna 30 at an angle corresponding to the direction of the user U1. For example, the information processing apparatus 100 simultaneously projects information that varies for each beam scanning angle direction onto the liquid crystal RIS antenna 30.

As in the example illustrated in FIG. 4, in a case where the terminal apparatus 10 (terminal apparatus 10₁) of the user U1 has received the beam in the beam direction #1, the information processing apparatus 100 performs control to enable viewing of information suitable for the taste and interest of the user U1 in the direction of beam direction #1. For example, the information processing apparatus 100 performs projection onto the liquid crystal RIS antenna 30 such that information suitable for the taste and interest of the user U1 will be displayed in the beam direction #1. In FIG. 4, as an example of information suitable for the taste and interest of the user U1, a room rental-related advertisement can be viewed in the direction of the beam direction #1. Furthermore, in a case where the terminal apparatus 10 (terminal apparatus 10₄) of the user U4 has received the beam in the beam direction #4, the information processing apparatus 100 performs control to enable viewing of information suitable for the taste and interest of the user U4 in the direction of the beam direction #4. For example, the information processing apparatus 100 performs projection onto the liquid crystal RIS antenna 30 such that information suitable for the taste and interest of the user U4 will be displayed in the beam direction #4. In FIG. 4, as an example of information suitable for the taste and interest of the user U4, a car-related advertisement can be viewed in the direction of the beam direction #4. In FIG. 4, the room rental-related advertisement and the car-related advertisement can be simultaneously viewed in the beam direction #1 and the beam direction #4, respectively. This makes it possible for the user U4 to view the car-related advertisement on the same display at the same time at which the user U1 views the room rental-related advertisement.

In FIG. 4, the angle of the liquid crystal RIS antenna 30 is fixed. By storing in advance information indicating that performing projection onto a predetermined portion (denoted as Portion A) of the liquid crystal RIS antenna 30 will display an image in a predetermined direction (denoted as an X direction) and that performing projection onto a predetermined portion (denoted as Portion B) of the liquid crystal RIS antenna 30 will display an image in a predetermined direction (denoted as a Y direction), projection of provision information (denoted as information Z) onto Portion A will enable viewing of the information Z in the X direction and projection of provision information (denoted as information W) onto Portion B will enable viewing of the information W in the Y direction. The information processing apparatus 100 acquires position information (and direction information) of the terminal apparatus 10 based on the beam reception direction from the base station 20, and projects the provision information onto a predetermined portion of the liquid crystal RIS antenna 30 to enable viewing of the provision information from the position of the acquired position information based on information that stores a predetermined direction in which the provision information can be viewed when the provision information is projected onto a predetermined portion.

### 4. Configuration of information processing apparatus

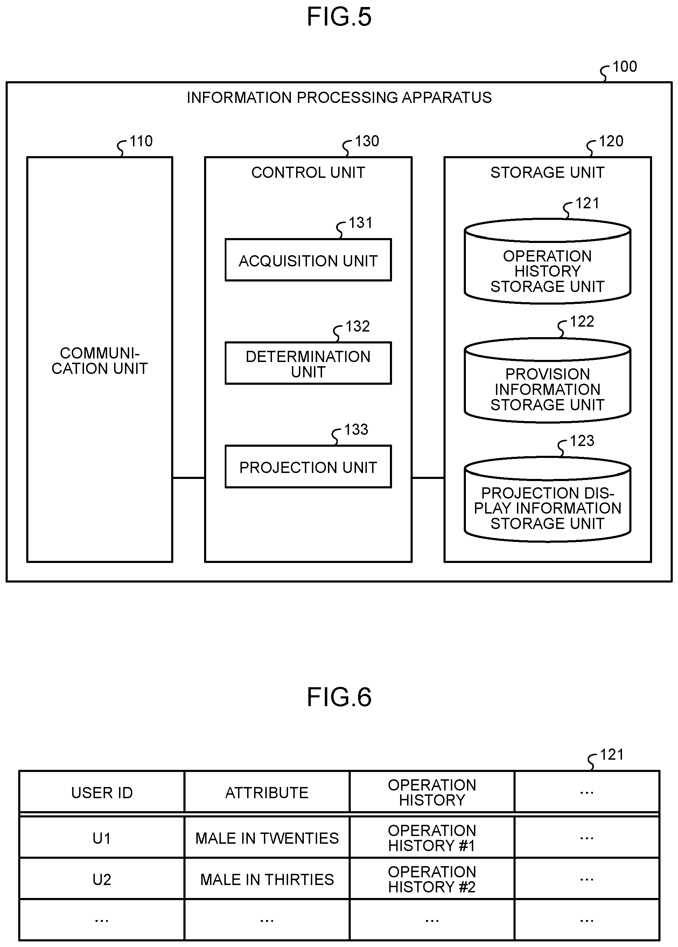

Next, a configuration of the information processing apparatus 100 according to the embodiment will be described with reference to FIG. 5. FIG. 5 is a diagram illustrating a configuration example of the information processing apparatus 100 according to the embodiment. As illustrated in FIG. 5, the information processing apparatus 100 includes a communication unit 110, a storage unit 120, and a control unit 130. The information processing apparatus 100 may include an input unit (for example, a keyboard, a mouse, etc.) that receives various types of operations from an administrator of the information processing apparatus 100, and a display unit (for example, a liquid crystal display or the like) that displays various types of information.

### (Communication unit 110)

The communication unit 110 is implemented by a device such as a Network Interface Card (NIC), for example. The communication unit 110 is connected to the network N in a wired or wireless connection, and transmits and receives information to and from the base station 20, etc. via the network N.

### (Storage unit 120)

The storage unit 120 is implemented by a semiconductor memory element such as Random Access Memory (RAM) or flash memory, or a storage apparatus such as a hard disk or an optical disk, for example. As illustrated in FIG. 5, the storage unit 120 includes an operation history storage unit 121, a provision information storage unit 122, and a projection display information storage unit 123.

The operation history storage unit 121 stores user's operation history (for example, a search history, a browsing history, etc.). Here, FIG. 6 illustrates an example of the operation history storage unit 121 according to the embodiment. As illustrated in FIG. 6, the operation history storage unit 121 includes items such as "user ID", "attribute", and "operation history".

The "user ID" indicates identification information for identifying the user. The "attribute" indicates an attribute of the user (for example, age, gender, etc.). The "operation history" indicates an operation history. In the example illustrated in FIG. 6, an example in which conceptual information such as "operation history #1" and "operation history #2" is stored in "operation history" has been described. However, actually, information such as a period and the number of times of an operation action is stored.

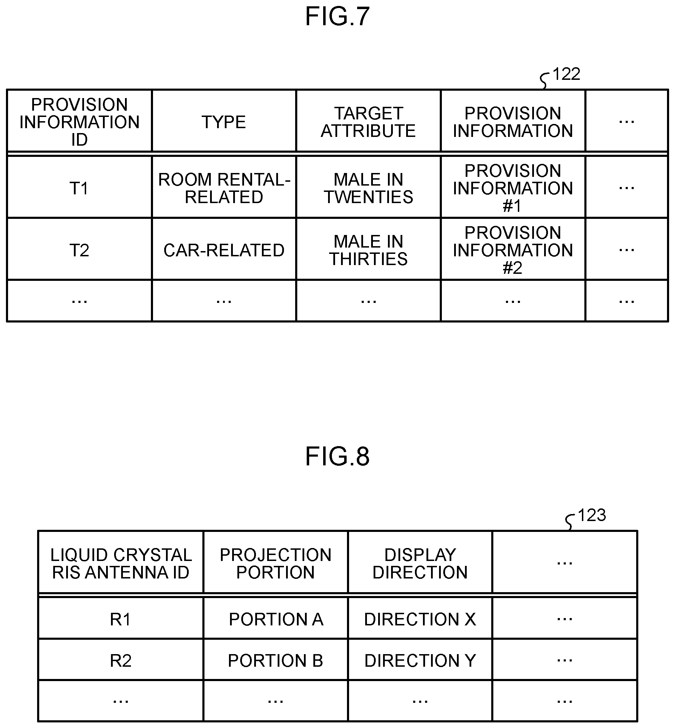

The provision information storage unit 122 stores provision information (for example, an advertisement in a still image or a moving image, etc.). Here, FIG. 7 illustrates an example of the provision information storage unit 122 according to the embodiment. As illustrated in FIG. 7, the provision information storage unit 122 includes items such as "provision information ID", "type", "target attribute", and "provision information".

The "provision information ID" indicates identification information for identifying the provision information. The "type" indicates a type (such as news and sports, for example) of the provision information. The "target attribute" indicates a user attribute (for example, male in twenties, etc.) targeted by the provision information. The "provision information" indicates provision information. In the example illustrated in FIG. 7, an example in which conceptual information such as "provision information #1" and "provision information #2" is stored in "provision information" has been described. However, actually, a text of content included in the provision information, etc. is stored. Furthermore, image data of content, etc. may be stored. For example, a Uniform Resource Locator (URL) where image data is located, a file path name indicating a storage location, etc. may be stored.

The projection display information storage unit 123 stores a predetermined direction in which the provision information can be viewed when projected onto a predetermined portion of the liquid crystal RIS antenna 30. Here, FIG. 8 illustrates an example of the projection display information storage unit 123 according to the embodiment. As illustrated in FIG. 8, the projection display information storage unit 123 includes items such as "liquid crystal RIS antenna ID", "projection portion", and "display direction".

The "liquid crystal RIS antenna ID" indicates identification information for identifying the liquid crystal RIS antenna. The "projection portion" indicates a predetermined portion (may be a portion at an angle of ○○) of the liquid crystal RIS antenna 30. The "display direction" indicates a predetermined direction (which may be a direction at an angle ○○) in which the provision information can be viewed.

### (Control unit 130)

The control unit 130 is a controller, and is implemented by a Central Processing Unit (CPU), a Micro Processing Unit (MPU), etc. executing various types of programs stored in a storage apparatus inside the information processing apparatus 100 using the RAM as a work area. Furthermore, the control unit 130 is implemented by an integrated circuit such as an Application Specific Integrated Circuit (ASIC) or a Field Programmable Gate Array (FPGA), for example.

As illustrated in FIG. 5, the control unit 130 includes an acquisition unit 131, a determination unit 132, and a projection unit 133, and implements or executes actions of information processing described below. Note that the internal configuration of the control unit 130 is not limited to the configuration illustrated in FIG. 5, and may be another configuration as long as information processing to be described below is performed.

### (Acquisition unit 131)

The acquisition unit 131 acquires various types of information. The acquisition unit 131 acquires various types of information from an external information processing apparatus. For example, the acquisition unit 131 acquires various types of information from another information processing apparatus such as the base station 20.

The acquisition unit 131 acquires various types of information from the storage unit 120. In addition, the acquisition unit 131 stores the acquired various types of information in the storage unit 120.

The acquisition unit 131 acquires, for example, information transmitted from the base station 20 and indicating that the user in the beam scanning angle direction has been specified. For example, the acquisition unit 131 acquires the identification information of the user (or the identification information of the terminal apparatus 10) specified by the base station 20 as the user in the beam scanning angle direction. Furthermore, the acquisition unit 131 acquires, for example, an operation history of a user (or an operation history of the terminal apparatus 10) specified by the base station 20 as a user in the beam scanning angle direction.

For example, the acquisition unit 131 acquires the position information of the terminal apparatus 10 based on the reception direction of the beam from the base station 20. For example, the acquisition unit 131 acquires the position information of the terminal apparatus 10 transmitted from the base station 20.

### (Determination unit 132)

For example, the determination unit 132 determines provision information directed to the user based on the operation history of the user acquired by the acquisition unit 131. For example, the determination unit 132 determines the provision information based on the operation history of the terminal apparatus 10 whose position has been estimated based on the reception direction of the beam from the base station 20. Furthermore, for example, the determination unit 132 determines provision information directed to the user by selecting provision information suitable for the user's taste and interest from among predetermined options of provision information.

For example, the determination unit 132 determines provision information directed to the user by using a learning model. For example, the determination unit 132 determines the provision information directed to the user by using a learning model capable of predicting provision information suitable for the user's taste and interest from the user's operation history. For example, the determination unit 132 determines provision information directed to the user by using a learning model that has learned a conversion result regarding the provision information provided to the user (for example, whether the user has purchased the product, etc. indicated by the provision information, whether the user has accessed an electronic mall for the product, etc. indicated by the provision information).

### (Projection unit 133)

For example, the projection unit 133 projects the provision information determined by the determination unit 132 onto the liquid crystal RIS antenna 30 at an angle corresponding to the direction of the user. For example, the projection unit 133 projects the provision information at an angle corresponding to a direction corresponding to position information of the terminal apparatus 10 acquired by the acquisition unit 131, based on the position information.

For example, the projection unit 133 projects the provision information such that the provision information can be viewed in the direction of the user in the beam scanning angle direction. For example, the projection unit 133 projects the provision information such that the provision information that varies for each beam scanning angle direction can be viewed. For example, the projection unit 133 projects the provision information based on information that stores a predetermined direction in which the provision information can be viewed when the provision information is projected onto a predetermined portion of the liquid crystal RIS antenna 30 (for example, information that stores that an image will be displayed in the X direction when projected on Portion A of the liquid crystal RIS antenna 30 and an image will be displayed in the Y direction when projected on Portion B of the liquid crystal RIS antenna 30).

### 5. Flow of information processing

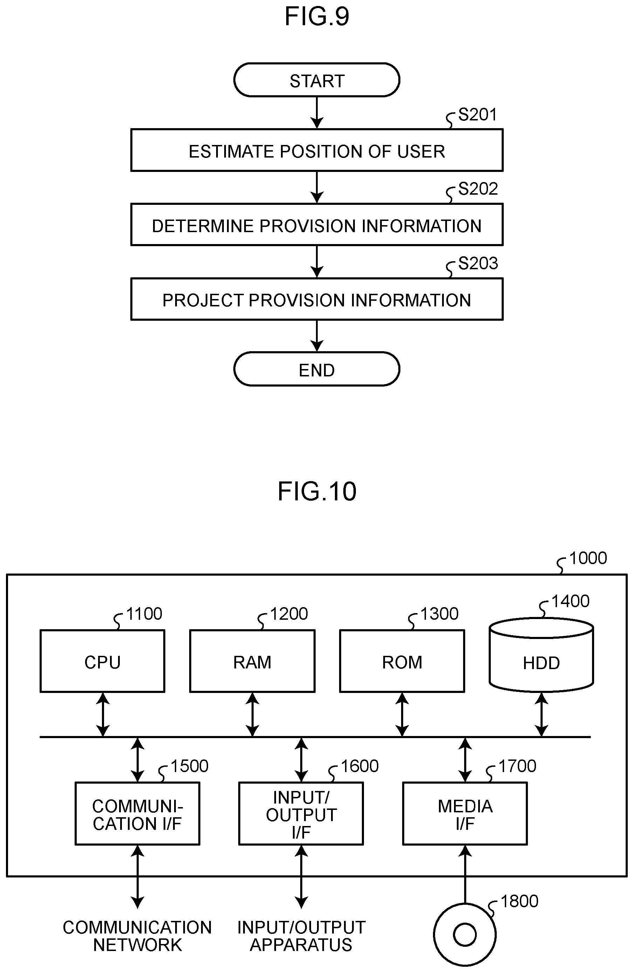

Next, a procedure of information processing by the communication system 1 according to the embodiment will be described with reference to FIG. 9.

As illustrated in FIG. 9, the communication system 1 estimates the position (and direction) of the user based on the reception direction of the beam from the base station 20 (step S201). The communication system 1 determines provision information directed to the user based on the operation history of the user (step S202). The communication system 1 projects the provision information at an angle corresponding to the direction of the user such that the provision information can be viewed in the direction of the user (step S203).

### 6. Effects

As described above, the communication system 1 according to the embodiment includes the base station 20 and the information processing apparatus 100. The base station 20 includes the liquid crystal RIS antenna 30 capable of projecting information that varies depending on the angle. The information processing apparatus 100 includes the control unit 130, which determines provision information to be provided to a user who uses a terminal apparatus 10 that communicates with the base station 20, based on an operation history of the terminal apparatus 10, and projects the determined provision information onto the liquid crystal RIS antenna 30 of the base station 20 at an angle corresponding to the direction of the user.

This enables the communication system 1 according to the embodiment to display an advertisement, etc. suitable for the user's taste and interest in the direction of the user by the communication between the terminal apparatus 10 and the base station 20, making it possible to promote measures for signal dead zones and improvement of MIMO efficiency in the communication. Furthermore, the communication system 1 according to the embodiment can obtain profit by advertisement distribution, etc. by displaying an advertisement, etc. on a display using the liquid crystal RIS antenna 30. In addition, the communication system 1 according to the embodiment can reduce the number of components as compared with the conventional technique, making it possible to achieve manufacture and operation with less cost. In addition, reduction of power consumption is possible. This also can omit necessity of calibration for each terminal. As a result, the communication system 1 according to the embodiment can promote further utilization of the frequency band. In addition, since the communication system 1 according to the embodiment can promote further utilization of the frequency band, it can contribute to the achievement of the goal 9 of the sustainable development goals (SDGs) "to establish the basis of industry and technological innovation".

The control unit 130 projects the provision information based on information that stores a predetermined direction in which the provision information can be viewed when projected onto a predetermined portion of the liquid crystal RIS antenna 30.

This enables the communication system 1 according to the embodiment to appropriately display an advertisement, etc. in the direction of the user by projecting the advertisement, etc. on a predetermined portion of the liquid crystal RIS antenna 30.

The control unit 130 projects the provision information onto a predetermined portion of the liquid crystal RIS antenna 30 such that the provision information can be viewed in the direction of the user.

This enables the communication system 1 according to the embodiment to appropriately display an advertisement, etc. in the direction of the user by projecting the advertisement, etc. on a predetermined portion of the liquid crystal RIS antenna 30.

In addition, based on the position information of the terminal apparatus 10 transmitted from the base station 20, the control unit 130 projects the provision information at an angle corresponding to the direction corresponding to the position information.

This enables the communication system 1 according to the embodiment to accurately grasp the position of the user, making it possible to appropriately display an advertisement, etc. in the direction of the user.

The control unit 130 determines the provision information based on the operation history of the terminal apparatus 10 whose position has been estimated based on the reception direction of the beam from the base station 20.

This enables the communication system 1 according to the embodiment to accurately grasp the position of the user, making it possible to appropriately display an advertisement, etc. in the direction of the user.

The control unit 130 determines the provision information to the user by using a learning model capable of predicting provision information suitable for the user's taste and interest from the user's operation history.

This enables the communication system 1 according to the embodiment to display an advertisement, etc. more suitable for the user's taste and interest.

The provision information is an advertisement. This enables the communication system 1 according to the embodiment to display an advertisement, etc. suitable for the user's taste and interest in the direction of the user by the communication between the terminal apparatus 10 and the base station 20.

### 7. Hardware Configuration

Furthermore, the information processing apparatus 100 according to the above-described embodiment is implemented by a computer 1000 having a configuration as illustrated in FIG. 10, for example. FIG. 10 is a hardware configuration diagram illustrating an example of the computer that implements the functions of the information processing apparatus 100. The computer 1000 includes a CPU 1100, RAM 1200, ROM 1300, an HDD 1400, a communication interface (I/F) 1500, an input/output interface (I/F) 1600, and a media interface (I/F) 1700.

The CPU 1100 operates based on a program stored in the ROM 1300 or the HDD 1400, and controls each unit. The ROM 1300 stores a boot program executed by the CPU 1100 when the computer 1000 is activated, a program that depends on hardware of the computer 1000, etc.

The HDD1400 stores a program executed by the CPU 1100, data used by the program, etc. The communication interface 1500 receives data from another device via a predetermined communication network, sends the data to the CPU 1100, and transmits data generated by the CPU 1100 to another device via a predetermined communication network.

The CPU 1100 controls output apparatuses such as a display and a printer, and input apparatuses such as a keyboard and a mouse via the input/output interface 1600. The CPU 1100 acquires data from the input apparatus via the input/output interface 1600. In addition, the CPU 1100 outputs the generated data to the output apparatus via the input/output interface 1600.

The media interface 1700 reads a program or data stored in a recording medium 1800 and provides the program or data to the CPU 1100 via the RAM 1200. The CPU 1100 loads the program from the recording medium 1800 onto the RAM 1200 via the media interface 1700, and executes the loaded program. Examples of the recording medium 1800 include an optical recording medium such as a Digital Versatile Disc (DVD) or a Phase change rewritable Disk (PD), a magneto-optical recording medium such as a Magneto-Optical disk (MO), a tape medium, a magnetic recording medium, or semiconductor memory.

For example, in a case where the computer 1000 functions as the information processing apparatus 100 according to the embodiment, the CPU 1100 of the computer 1000 executes the program loaded on the RAM 1200 to implement the functions of the control unit 130. The CPU 1100 of the computer 1000 reads and executes these programs from the recording medium 1800, but as another example, the CPU 1100 may acquire these programs from another apparatus via a predetermined communication network.

While some of the embodiments of the present application have been described in detail with reference to the drawings, these are merely examples, and the present invention can be implemented in other forms subjected to various modifications and improvements based on the expertise of those skilled in the art, including the aspects described in the disclosure of the invention.

### 8. Others

Among the processes described in the above embodiments, all or a part of the processes described as being automatically performed can be manually performed, or all or a part of the processes described as being manually performed can be automatically performed by a known method. In addition, the processing procedure, specific name, and information including various types of data and parameters illustrated in the document and the drawings can be changed in any manner unless otherwise specified. For example, the various types of information illustrated in each figure are not limited to the illustrated information.

In addition, each component of each apparatus illustrated in the drawings is functionally conceptual, and is not necessarily physically configured as illustrated in the drawings. That is, a specific form of distribution and integration of each apparatus is not limited to the illustrated form, and all or a part thereof can be functionally or physically distributed and integrated in any unit in accordance with various types of loads, usage conditions, etc.

The above-described information processing apparatus 100 may be implemented by a plurality of server computers, and the configuration can be flexibly changed depending on a function such that an external platform, etc. is called with an Application Programming Interface (API), network computing, etc. to implement the function.

In addition, the above-described embodiments can be appropriately combined within a range not causing contradiction of processing content.

### Reference Signs List

- 1: COMMUNICATION SYSTEM
- 10: TERMINAL APPARATUS
- 20: BASE STATION
- 30: LIQUID CRYSTAL RIS ANTENNA
- 100: INFORMATION PROCESSING APPARATUS
- 110: COMMUNICATION UNIT
- 120: STORAGE UNIT
- 121: OPERATION HISTORY STORAGE UNIT
- 122: PROVISION INFORMATION STORAGE UNIT
- 123: PROJECTION DISPLAY INFORMATION STORAGE UNIT
- 130: CONTROL UNIT
- 131: ACQUISITION UNIT
- 132: DETERMINATION UNIT
- 133: PROJECTION UNIT
- N: NETWORK

## Claims

1. A communication system comprising a base station and an information processing apparatus,
wherein the base station includes
a liquid crystal RIS antenna capable of projecting various information that varies depending on an angle, and
the information processing apparatus includes
a control unit that performs processing including:
determining provision information to be provided to a user who uses a terminal apparatus that performs communication with the base station, based on an operation history of the terminal apparatus; and
projecting the determined provision information onto the liquid crystal RIS antenna of the base station at an angle corresponding to a direction of the user.

2. The communication system according to claim 1,
wherein the control unit projects the provision information based on information that stores a predetermined direction in which the provision information can be viewed when projected onto a predetermined portion of the liquid crystal RIS antenna.

3. The communication system according to claim 1,
wherein the control unit projects the provision information onto a predetermined portion of the liquid crystal RIS antenna such that the provision information can be viewed in the direction of the user.

4. The communication system according to claim 1,
wherein the control unit projects the provision information at an angle corresponding to a direction corresponding to position information of the terminal apparatus transmitted from the base station, based on the position information.

5. The communication system according to claim 1,
wherein the control unit determines the provision information based on an operation history of the terminal apparatus whose position has been estimated based on a reception direction of a beam from the base station.

6. The communication system according to claim 1,
wherein the control unit determines the provision information by using a learning model capable of predicting provision information suitable for taste and interest of the user from an operation history of the user.

7. The communication system according to claim 1,
wherein the provision information is an advertisement.

8. A communication method, executed by a communication system including a base station and an information processing apparatus,
wherein the base station includes
a liquid crystal RIS antenna capable of projecting various information that varies depending on an angle, and
the information processing apparatus performs processing including:
determining provision information to be provided to a user who uses a terminal apparatus that performs communication with the base station, based on an operation history of the terminal apparatus; and
projecting the determined provision information onto the liquid crystal RIS antenna of the base station at an angle corresponding to a direction of the user.
